# EUROPEAN PATENT SPECIFICATION

(11) **EP 3 457 867 B1**
(45) Date of publication and mention of the grant of the patent: **01.12.2021**
(21) Application number: 17798419.2
(22) Date of filing: 20.03.2017
(51) Int. Cl.: A23L 5/10, A23L 27/00, A23L 5/30, A47J 27/026, A47J 43/00, A47J 27/086, A47J 37/06, A23L 13/00, A23L 13/70

(54) **PRESSURE-CONTROLLED SOUS-VIDE COOKING METHOD AND APPLIANCE**
VERFAHREN UND GERÄT ZUM DRUCKGESTEUERTEN VAKUUMKOCHEN
PROCÉDÉ ET APPAREIL DE CUISSON SOUS-VIDE COMMANDÉ PAR PRESSION

(30) Priority: 17.05.2016 US 201662391965 P; 28.10.2016 US 201662496756 P
(43) Date of publication of application: 27.03.2019
(73) Proprietor: Meier, Hans, J., Broxburn, West Lothian EH52 6HW (GB)
(72) Inventor: Meier, Hans, J., Broxburn, West Lothian EH52 6HW (GB)
(74) Representative: Keschmann, Marc
(86) International application number: PCT/CA2017/000060
(87) International publication number: WO 2017/197482

(56) References cited:
- WO-A1-2015/056284
- US-A1- 2008 066 624
- US-A1- 2011 185 915
- US-A1- 2014 322 418
- US-A1- 2015 257 574
- US-A1- 2015 335 192
- US-A1- 2015 351 579
- US-A1- 2015 351 579
- US-B2- 8 833 245
- US-B2- 9 220 362

## Description

This application claims the benefit of U.S. Provisional Application No. 62/391,965 filed May 17, 2016, and U.S. Provisional Application No. 62/496,756 filed October 28, 2016.

### FIELD OF THE INVENTION

This invention pertains to cooking appliances and methods for controlling pressure, temperature and flavoring of food items during a cooking process.

### BACKGROUND OF THE INVENTION

Flavor sheets are used for curing or marinating meat portions or other food items. A meat portion, for example, is packaged together with a flavor sheet, in such a way that the flavor sheet is in direct contact with the meat. The meat portion is cured or marinated during storage in a refrigerator, or in a refrigerated transport during delivery to the client.

These flavor sheets are made of a substrate suitable for contact with food. A treatment layer is deposited onto the substrate. This treatment layer comprises a pre-determinated amount of edible adhesive and a curing or marinating agent mixed in or otherwise retained to the substrate by the adhesive. When the meat is wrapped and packaged with a flavor sheet, the meat is in intimate contact with the food treatment layer of the flavor sheet. The adhesive dissolves in contact with the meat to release the curing or marinating substance onto the surface of the meat portion, for absorption into the meat portion. A flavor of smoked meat for example can be obtained without smoking the meat. A flavor of maple-wood grilled steak for example can be obtained without grilling the steak. The flavor of frying or roasting can be obtained without frying or roasting the meat.

The flavor sheet technology can now infuse food with not only flavor but also a whole new set of food standards including visual and aromatic appeal; shelf life extension; nutritional improvements which can be expanded to, spices, salt, vitamins, minerals, fatty acids, and other nutritive supplements. The words curing, marinating and flavoring are used interchangeably herein to designate all the above food improvements.

Other benefits of flavoring sheets are disclosed in the publication:
US Patent # 6,623,773, issued to Hans J. Meier on Sep. 23, 2003.

In another aspect in the preparation of food delicacies, "sous-vide" cooking is a method for cooking food that maintains the integrity of ingredients by heating them for an extended period of time at relatively low temperatures.

It is known that food cooked in a "sous-vide" environment may result in food that has been cooked more uniformly throughout when compared with food prepared by other cooking methods. It has been taught that food cooked by sous-vide cooking methods have better flavors, texture, or nutritional value than food cooked by frying or grilling for example.

Some aspects of sous-vide cooking appliances are described in the following publications:
US Patent 8,833,245 issued to E. Alipour on Sept. 16, 2014.
US Patent 9,282,846 issued to E. Alipour et al., on Mar. 15, 2016.

A sous-vide cooking appliance as described therein creates a vacuum around the food item and brings a heat transfer membrane in direct contact with the food item. The heat transfer medium in contact with the membrane is often a liquid. Generally, food is placed in a plastic bag, sealed under vacuum inside the bag. Heated water is circulated against the exterior of the plastic bag to cook the food inside the bag. Cooking is done for a long period of time, sometimes up to 24 hours at temperatures that are well below the boiling point of water, typically around 60-70° C. It is claimed that because the air is removed from the bag, a better control of the heat transfer can be maintained.

Because the food is cooked in an airless environment, it is easier to maintain an ideal core temperature for that food. The airless environment eliminates the effect of gas pressure inside the cooking chamber and any associated fluctuation in temperature.

Theoretically, if no air or other gases is present in the sealed package, there is no gas to inflate the bag upon heating and to reduce heat transfer through the bag. More importantly, the law of Thermodynamics teaches that pressure-temperature-volume (pvT) and interdependent from each other in a heat exchange process. An increase in temperature causes the pressure to rise, and an increase in pressure causes the temperature to increase. Therefore, the presence of air in a cooking container causes an increase in pressure in that container during the cooking process, and causes the temperature to fluctuate to an unknown value. One purpose of a "sous-vide" cooking process, is to eliminate internal pressure due to air (airless) and to control volume so that temperature of cooking is better known and controlled.

Because of the low-temperature cooking in a sous-vide appliance, this method of cooking food has its inconvenience. For example, it is difficult to impart an open-fire-grilled taste to a piece of steak that has been cooked in a sous-vide appliance. This drawback has been solved by partly cooking the meat in a sous-vide appliance and finishing the cooking on an open-fire grill to sear the meat and to impart the meat with the desired taste and texture. This solution lengthens the cooking process and adds an extra step to a recipe.

Another drawback with sous-vide cooking methods is the absence of pressure on the meat. The absence of pressure on the meat has the adverse effects on some meats are prone to hardening. The heat from cooking causes connective tissues from these meats to contract. The heat from cooking causes the hardening of the meats, making them less tender and less succulent.

Also, a perfect vacuum is difficult to obtain. A pressure from residual gases inside the plastic bag is affected by altitude above sea level, by atmospheric pressure and by the cooking temperature. Because of this, basically, it becomes difficult to control precisely the pressure inside the plastic bag and the amount of water and juice released from the food during a sous-vide cooking process. This could render the food dry and less succulent. It also becomes somewhat difficult to control the degree of doneness of cooked food in a sous-vide cooking process by controlling only the temperature of a heat transfer medium, and not the residual pressure inside the cooking envelope.

Although the inventions found in the prior art deserve undeniable merits, it is believed that there is a need in the culinary industry for an appliance and method that are compatible to the use of flavor sheets in a sous-vide cooking environment.

### SUMMARY OF THE PRESENT INVENTION

In the present invention there is provided an appliance and a method of cooking food using flavor sheet technology in a waterless, pressure-controlled sous-vide appliance.

In a first aspect of the present invention, there is provided a method for cooking and flavoring a food item. This method included the steps of: sealing the food item in a plastic bag with a flavoring sheet; and applying a pressure and heat on that food item for a cooking time period. The step of applying a pressure and heat includes controlling a pressure according to a pressure setting corresponding to a nature or to the ingredients in said flavoring sheet, or to both.

In another aspect of the present invention, the step of applying also comprises the step of applying a pressure and heat temperature that have a relation with each other and with a cooking time period. The step of applying a pressure and heat also comprises varying that pressure and temperature according to that relation, as a function of the cooking time period. That relation and this function are selected from settings corresponding to a nature of the food item being cooked.

When the food item is meat for example, the pressure-temperature relation and function are selected for causing an optimum amount of albumins to exude from the meat; to contact the flavoring sheet, to entrap the flavoring substance from the sheet and to be absorbed back into the meat.

In another aspect of the present invention, there is provided a cooking appliance for cooking food items. The cooking appliance comprises a heating surface for receiving a food item thereon, and an inflatable membrane mounted against the heating surface for covering the heating surface and the food item. A locking device is included for retaining the inflatable membrane against the heating surface. The cooking appliance also comprises an air pump device incorporated therein for inflating the inflatable membrane and for applying a controlled pressure on the food item being cooked.

When cooking is done with a flavoring sheet in contact with the food item, the pressure created on the food item causes food juices to be brought to the surface of the food item and to dissolve with and to encapsulate flavoring substance from the flavoring sheet.

Depending on the calibration of the flavoring sheets, an endless variation of culinary objectives can be achieved, ranging from a simple topical seasoning to complex marinating, aromatic improvement, smoking, stewing, roasting, glazing and crusting.

In another aspect of the cooking appliance according to the present invention, the cooking appliance further comprises a pressure regulator for precisely controlling the air pressure inside the inflatable membrane. Such pressure regulator provides, to a certain extent, the ability to control a depth from which food juices are brought out of the food item.

The cooking appliance according to the present invention can be used with flavoring sheets to prepare delicious dishes such as, for examples only: BBQ^{™} proteins, smoked salmon, Gravid Lux^{™}, stews, roasted chicken, pot roasts, seafood with white sauce, or plain seasoned pork chops.

In yet another aspect of the present invention, the cooking appliance further comprises a bag sealing device mounted near the heating surface thereof for selectively sealing the food item in a plastic bag.

While pressure-controlled sous-vide cooking is an important aspect of the present invention, the cooking appliance can be used to vacuum-seal a food item in a bag for freezing and storage for examples.

In yet a further aspect of the present invention, the cooking appliance also comprises a mini-refrigeration system mounted in the lid thereof. This mini-refrigeration system is used for selectively cooling the inflatable membrane and the food item inside the cooking appliance. A food item can be sealed, cooled and stored inside the cooking appliance until meal time.

This brief summary has been provided so that the nature of the invention may be understood quickly. A more complete understanding of the invention can be obtained by reference to the following detailed description of the preferred embodiment thereof in connection with the attached drawings.

### BRIEF DESCRIPTION OF THE DRAWINGS

A preferred embodiment of the pressure-controlled sous-vide cooking appliance according to a preferred embodiment of the present invention is described with the aid of the accompanying drawings, in which like numerals denote like parts throughout the several views:
**FIG. 1** is a perspective top view of the sous-vide cooking appliance according to the preferred embodiment of the present invention, shown with a piece of meat being readied for cooking;
**FIG. 2** is a broken-away perspective top view of the sous-vide cooking appliance according to the preferred embodiment of the present invention, with the lid thereof fully open;
**FIG. 3** is another perspective view of the sous-vide cooking appliance according to the preferred embodiment of the present invention shown in a closed mode;
**FIG. 4** is a detached side view of the sous-vide cooking appliance according to the preferred embodiment of the present invention;
**FIG. 5** is a cross-section view of the food package in **FIG. 1**, as seen along **line 5-5** in **FIG. 1**;
**FIG. 6** is an enlarged view of a portion of the food package in **FIG. 1**, as seen in **detail circle 6** in **FIG. 5****.**

The drawings presented herein are presented for convenience to explain the functions of all the elements includes in the cooking appliance according to the preferred embodiment of the present invention. Elements and details that are obvious to the person skilled in the art may not have been illustrated. Conceptual sketches have been used to illustrate elements that would be readily understood in the light of the present disclosure. These drawings are not fabrication drawings, and should not be scaled.

### DESCRIPTION OF THE PREFERRED EMBODIMENT

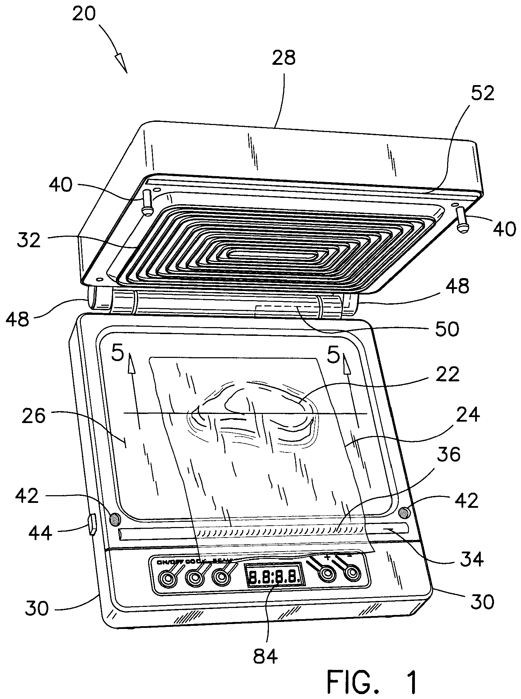

Referring firstly to **FIG. 1** the preferred pressure-controlled sous-vide appliance, referred to herein as the sous-vide appliance **20** is illustrated at an interim point during a cooking process. A piece of food item **22** is placed in a plastic bag **24** and set on the resilient heating pad **26.** In use, the lid **28** is closed over the base member **30.** The deformable membrane **32** of the lid is inflated, flattening the plastic bag **24** and the food item **22**, and evacuating the air from inside the bag **24.** The heat-sealing bar **34** is activated to seal the bag **24** at its opening **36** in an airless, vacuum-like condition.

After the bag **24** has been sealed over the food item **22**, the lid **28** of the appliance is locked in a closed position over the base member **30** and the cooking cycle can be started.

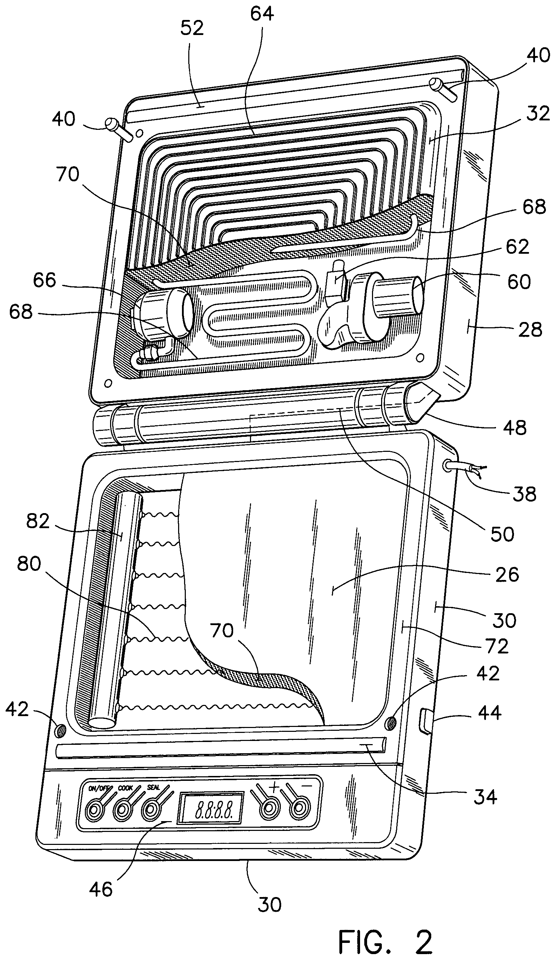

Referring to **FIG. 2**, the overall arrangement of the preferred sous-vide appliance **20** is illustrated therein. The sous-vide appliance **20** has a clamshell design with a lid **28** and a base **30.** The lid **28** has a pair of lock pins **40** on its inside surface. These pins **40** engage into a corresponding pair of holes **42** in the upper surface of the base member **30.** Release buttons **44** in the sides of the base member **30** are used to release the lock pins **40** from a locking mechanism (not shown) mounted inside the base member **30.** Although a pair of lock pins **40** and associated mechanisms are mentioned herein, it will be appreciated that other case locking devices can be used to retain the lid 28 tightly against the base member **30.**

Referring again to **FIG. 2**, the base member **30** has a heating pad **26** therein which preferably has a reflective upper surface that is relatively rigid. Alongside the heating pad **26**, there is illustrated the heat-sealing bar **34.** This bar is operated on 12 volts DC power and has capacity to seal common plastic bags. Next to the heat-sealing bar **34** is mounted the control display pad **46** and circuitry of the appliance. A battery (not shown) is preferably mounted in the base member **30** under the display pad **46** and circuitry of the appliance. A computer including a memory is also preferably included in the base **30** under the control pad **46.** The preferred sous-vide appliance **20** also has a battery charger (not shown) therein, which has an electrical supply cord **38.** This cord **38** is partly illustrated along the right hand side of the base **30** in **FIG. 2****.**

The lid **28** has a flexible inflatable membrane **32** thereon. This membrane **32** comes in contact with the heating pad **26** of the base member **30**, when the lid **28** is closed over the base member **30.** The lid **28** is movably retained to the base member **30** by a hinge **48.**

Wiring and tubing between the base member **30** and the lid **28** are routed through that hinge **48** as indicated by dashed line **50.**

The display pad **46**, controls and instrumentation of the preferred sous-vide appliance **20** comprises an on/off button; a cook mode button; a bag seal mode button; a clock and a plus and minus buttons to set the clock and the cooking time, to change cooking modes; and temperature and pressure modes. The instrumentation mentioned above also include at least one temperature sensor, a pressure sensor and a timer. The electronic circuits for all these functions are enclosed in the front portion of the base member **30**, underneath the display pad **46.**

The preferred sous-vide appliance **20** is operable as a sous-vide appliance providing cooking temperature of up to 80°C. The preferred sous-vide appliance **20** is also operable as a vacuum packaging device. In the vacuum packing mode, the sous-vide cooking features of the preferred sous-vide appliance **20** are advantageously used to evacuate air from a package. A pair of heat-sealing bars **34** and **52** are used to seal the package while it is maintained under an airless state.

The lid **28** preferably contains a mini air compressor **60** and an electronically-controlled precision mini air pressure regulator **62** for controlling the degree of inflation of the membrane **32** and the pressure to be applied to the food item being cooked. The inflatable membrane **32** is made of concentric ridges **64** extending from the outside surface of a flexible skin-like material. It will be appreciated that the flexible membrane **32** is made of a washable, heat-resistant, food-grade silicon or latex material for example.

The lid **28** also preferably contains a mini-refrigeration unit **66** and an associated refrigerant tubing array **68.** The tubing array **68**; the refrigeration unit **66**; the air compressor **60** and the pressure regulating valve **62** are preferably enclosed in a layer of porous, sponge-like heat conductive material **70.** The membrane **32** is sealed to the lid **28** along its perimeter to form with the lid **28** an inflatable bladder.

The membrane 32 is inflatable to apply a pressure against a piece of food in a plastic bag, by way of the mini-air compressor 60 and the electronic pressure regulator 62.

The base member 30 may have a similar inflatable bladder mounted therein facing the membrane 32. In the preferred embodiment, the base member 30 has a heating plate 26 which is substantially rigid and has a reflective surface thereon. The heating plate 26 is preferably set somewhat lower than the rim 72 of the base member 30, so as to form a shallow receptacle on the surface of the base member 30.

An array of heating elements 80 and bus bars 82 are preferably mounted in the base member 30 under the heating plate 26. The heating elements 80 and the bus bars 82 (only one is shown), are enclosed in a porous, sponge-like heat conductive material 70 as the material used in the lid 28. It will be appreciated that other heat sources can be used. For example, the heat source may be a circulating hot gas, hot water or steam.

The heating plate 26 in the base member 30 may include a pressurized non-expandable bladder (not shown) that is inflated at a basic pressure of 20684 Pa (3 psi.), for example.

All the elements included in the base member 30 and the lid 28 are heat resistant, capable of withstanding temperatures of more than 80°C without damage. A temperature sensor (not shown) for controlling the operation of the heating elements 80 is preferably mounted under the heating pad 26.

Referring back to FIG. 1, it will be appreciated that a plastic bag 24 with a food item in it, a steak for example 22, is flattened upon closing of the cover 28 over the base member 30. The air inside the bag 24 is forced out, and the food item 22 inside the bag is maintained in a "sous-vide" condition as long as the cover 28 is closed and locked against the base member 30. This food item 22 can be cooked at very low temperature of around 80°C. A timer 84 is used to control the cooking time. Preferably, this food item 22 is maintained under a pressure of about 6895 - 27579 Pa (1 - 4 psi.), during the entire cooking period. This pressure setting is provided herein as an example only, as this setting will be explained further herein below. The air pump 60 and regulator 62 can be used to inflate the pressurized bladders 32 to pressure higher or lower than 27579 Pa (4 psi.), if needed.

In a preferred embodiment, the pressure in the bladder 32 can be varied between 0 - 413685 Pa (0-60 psi.). The temperature of cooking can be adjusted from 50° C to 80°C in a residential model, and between 50°C and 100°C in a commercial or industrial model.

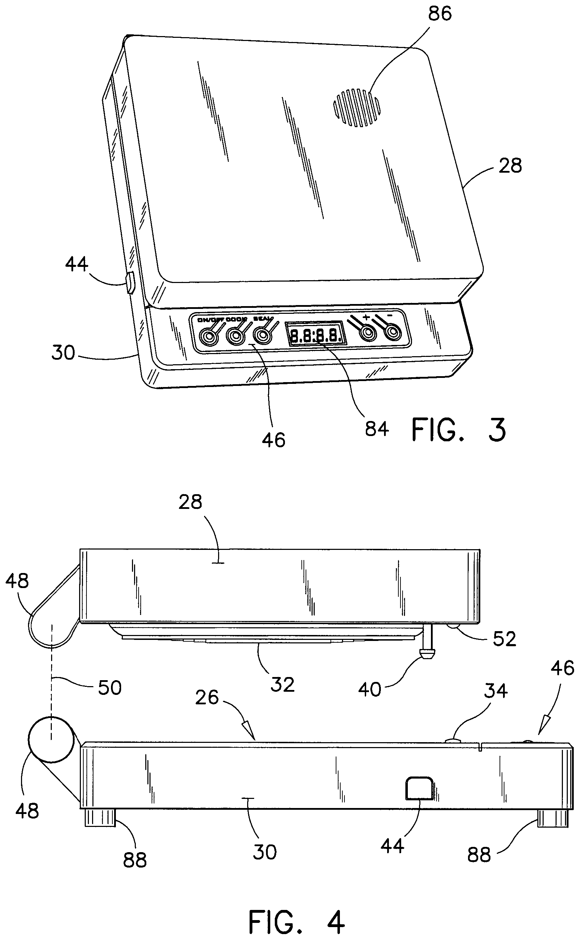

Referring now to FIGS. 3 and 4, the preferred sous-vide cooking appliance 20 is illustrated in different views to show the elements of the appliance in alternate viewing angles. The array of slots 86 in FIG. 3, represents an air opening for the mini compressor 60. The bosses 88 under the base member 30 of the appliance in FIG. 4 represent legs to support the base member 30 over a horizontal surface.

Because the preferred sous-vide cooking appliance 20 has the ability to control the pressure surrounding the bag and the food item inside a bag, new culinary objectives can be contemplated. The preferred sous-vide appliance 20 can be used with flavor sheets as mentioned herein before.

Referring now to **FIGS. 1**, **5** and **6**, a method of imparting flavor to a food item during cooking will be explained.

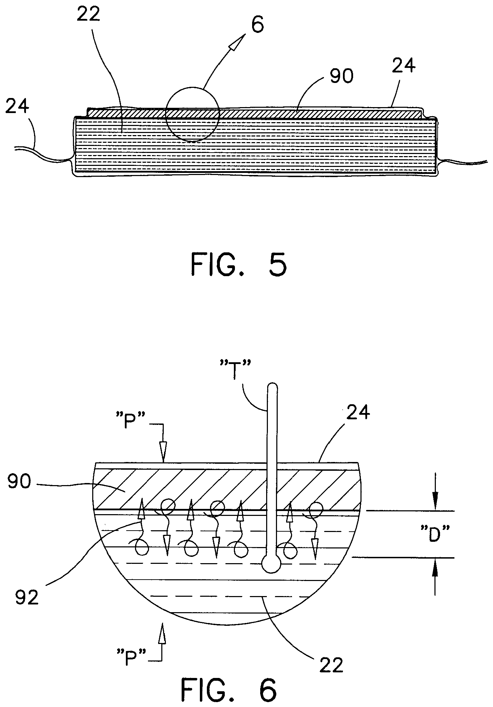

A preferred preparation for food item **22** is illustrated in **FIG. 5****.** The food item **22** is covered by a flavor sheet **90** and sealed airless in a plastic bag **24.** The illustration in **FIG. 6**, explains the exchange of flavoring particles to the food item. As the temperature **"T"** increases in the food item **22**, the pressure inside the food item also increases because of a natural relationship between pressure and temperature in a fixed volume. Because of this increased pressure, the juices, as represented by label **92**, that are present in the food item exude or weep out of the food item **22** when the plastic bag **24** is held on all sides and prevented from expanding.

These juices **92** exude from the surface of the food item and mix with the flavoring substance at the surface of the flavoring sheet **90.** When the food item **22** is meat or other protein-based food, the juices **92** contain albumins. Preferably the adhesive of the flavor sheet contains an acid, sorbic acid for example. The acid present in the adhesive of the flavoring sheet causes these albumins to coagulate and to entrap therein the flavor particulate of the sheet. Because of the movement of the juices occurring at the surface of the meat during cooking, the coagulating albumins and flavor particulate are entrapped into the meat surface. The pressure inside the inflatable membrane **32**, and the corresponding pressure **"P"** applied to the food item **22**, determines the depth **"D"** of penetration at which the food juices **92** are driven out from the meat, and back into the surface of the meat.

It will be appreciated that hot regions at the surface of a food item being cooked comprises microscopic regions of higher and lower temperature; and microscopic regions of higher and lower pressure. This effervescence-like regions help to absorb the coagulated albumin and encapsulated flavoring substance, back into the meat.

In order to further promote the absorption of flavoring substance deep in the food surface, the pressure **"P"** inside the pressurized bladder **32** can be relaxed and increased alternately or at the end of the cooking cycle. The cooking temperature **"T"** can also be relaxed and increased alternately or at the end of the cooking cycle to produce a similar effect.

The food items cooked in the preferred pressure-controlled sous-vide cooker remain moist and succulent, and a better degree of flavor transfer is obtained.

As mentioned before, pressure-temperature-volume (pvT) are interdependent from each other in a heat exchange process. Another variable is cooking time. In the pressure-controlled sous-vide cooking process according to the preferred embodiment of the present invention, the volume of the food item is kept constant, under pressure. Pressure is therefor interdependent with temperature and cooking time only.

In such a process, cooking time and temperature are important factors to obtain doneness and tenderness of a food item. Cooking time and temperature are depending on the size and type of food item being cooked. Pressure is an important factor to obtain the flavor and appearance of a food item. Pressure determines whether a flavor is absorbed superficially or deeply into the food item. Pressure is dependent on the type of food being cooked as well as on temperature, cooking time and the type of flavoring sheet used. Pressure also prevent contraction of connective tissues in meats that are prone to hardening.

In the pressure-controlled sous-vide cooking process according to the preferred embodiment of the present invention, temperature and cooking time are considered as a priority, or as dominant factors in a relation pressure-temperature, while pressure is considered as a secondary factor. When pressure is applied to the food item for flavor transfer, adjustment or correction is made if needed, to the temperature so that the temperature-cooking time product of a recipe remains unchanged.

Pressure is never increased to the point of, or at a moment wherein the food item can be over-cooked. Pressure can be increased, for example, at a moment when the food item is thoroughly hot and has sufficient entropy to tolerate a reduction of heat to accommodate an increase in pressure. Similarly, a relaxation of pressure can be accompanied by an increase of energy to the heater. In the pressure-controlled sous-vide cooking process according to the preferred embodiment of the present invention, a relation pressure-temperature, is a relation where temperature is a dominant factor. In other words, pressure and temperature are varied for obtaining a flavor transfer into the food item, for obtaining tenderness, and for maintaining constant a heat absorption by said food item during the cooking period

For examples, the following pressure settings in **Table 1**, are recommended for different proteins and different ingredients in the flavoring sheet used:

**Table 1.**

| Protein type | Pressure Settings |
|---|---|
| For tenderizing meat prone to contraction during cooking | 2-4 psi. |
| For marinating formulations | 2-4 psi. |
| For herb and spice formulations | 1-1.5 psi. |
| For chicken, fish and similar density protein | 1-1.5 psi. |
| For steaks, chops, and similar density protein | 2-3 psi. |
| For stews and sauces | less than 1 psi. |
| To increase exuded moisture | less than 1 psi. |

It will be understood that a higher pressure causes shorter cooking and marinating time periods. Pressure may also be varied during the cooking period of a same food item. For example, a higher pressure may be used for a portion of the cooking period and a lower pressure may be used during another portion to increase exuded moisture and obtain a sauce or gravy base.

The selectable relations between pressure and temperature, and the variation of these relations as a function of cooking time, are preferably established by chefs according to experiments carried out with the preferred pressure-controlled sous-vide cooking appliance **20.** Corresponding cooking mode settings and cooking programs are developed and included in the memory of the controller of the preferred sous-vide appliance **20.** These recipes can be selected by the user from the display pad **46.**

For example, a recipe may include pressure-temperature settings and variations over a cooking time period for a specific size and nature of food item and a specific flavoring sheet. Such recipe may be developed for meat of different protein contents, different cut portions, different thicknesses, different size and weight, and different flavor and tenderness desired. These recipes are preferably pre-programmed in the control system of the preferred sous-vide appliance **20** through the display pad **46.** These recipes are preferably selected by the user from a menu display, as a selectable window under the clock **84.**

Furthermore, the preferred sous-vide cooking appliance **20** contains a mini-refrigeration system **66**, **68**, whereby a food item can be sealed in an airless condition, refrigerated inside the appliance **20** and taking out as in a lunch box. The food item can be stored in a refrigerated state and cooked at a preset time and temperature mode to be readied at meal time.

## Claims

1. A method for cooking and curing a food item (22), comprising the steps of:
sealing a food item (22) in an airless mode with a flavoring sheet (90);
applying pressure and heat on said food item (22) for a time period;
wherein said step of applying includes:
controlling said pressure according to a pressure setting corresponding to a nature of said flavoring sheet (90).

2. The method for cooking and curing a food item (22) as claimed in claim 1, wherein said step of applying also comprises controlling said pressure according to a pressure setting corresponding to ingredients in said flavoring sheet (90) .

3. The method for cooking and curing a food item (22) as claimed in claim 1, wherein said step of applying also comprises the step of controlling said pressure according to a temperature of said heat.

4. The method for cooking and curing a food item (22), as claimed in claim 1, wherein said step of applying includes:
controlling said pressure and heat temperature according to a relation between said pressure and said temperature and
varying said pressure and said temperature according to a function of said time period.

5. The method for cooking and curing a food item (22), as claimed in claim 4, wherein said relation and said function are being selected from a recipe corresponding to a nature of said food item (22).

6. The method for cooking and curing a food item (22) as claimed in claim 5, wherein said relation between said pressure and temperature is a relation where said temperature is a dominant factor and a heat absorption in said food item (22) remains constant during a major portion of said time period.

7. The method for cooking and curing a food item (22) as claimed in claim 1, wherein said step of sealing comprises placing said food item (22) and said flavoring sheet (90) in a plastic bag (24).

8. The method for cooking and curing a food item (22) as claimed in claim 5, wherein said step of applying pressure on said food item (22) comprises the steps of:
placing said plastic bag (24) against a heating surface (26);
applying a deformable membrane (32) against said plastic bag (24) and said heating surface (26);
retaining said deformable membrane (32) at a fix distance from said heating surface (26);
inflating said deformable membrane (32) to said pressure.

9. The method for cooking and curing as claimed as claim 1, further including the step of selecting a flavoring sheet (90) comprising an edible adhesive containing an acid.

10. The method for cooking and curing a food (22) item as claimed in claim 9, wherein said food item (22) is protein and further including the step of selecting a pressure-temperature relation for causing albumins to exude out from said protein;
to contact said flavoring sheet (90), and to be absorbed back into said protein.

11. The method for cooking and curing a food item (22) as claimed in claim 5, further including the steps of cooling said plastic bag (24) and said food item (22) between said inflatable membrane (32) and said heating plate (26), while delaying said step of applying pressure and heat to said plastic bag (24).

12. The method for cooking and curing a food item (22) as claimed in claim 5, wherein said pressure is alternately relaxed and increased during said step of applying pressure and heat.

13. A cooking appliance for cooking food items (22), comprising:
a heating surface (26) for receiving one of said food items (22), and an inflatable membrane (32) mounted against said heating surface (26), for covering said heating surface (26) and said food item (22);
locking device for retaining said inflatable membrane (32) against said heating surface (26); **characterized by** an air pumping device incorporated therein for inflating said inflatable membrane (32) and for applying a pressure on said food item (22) against said heating surface (26).

14. The cooking appliance as claimed in claim 13, further comprising a pressure regulator (62) for controlling an air pressure inside said inflatable membrane (32).

15. The cooking appliance as claimed in claim 13, further comprising a bag sealing device mounted near said heating surface for selectively sealing said food (22) item in a plastic bag (24).

16. The cooking appliance as claimed in claim 15, further having a clam shell design having a lid (28) and a base member (30), and wherein said heating surface (26) is mounted in said base member (30) and said inflatable membrane (32) is mounted in said lid (28).

17. The cooking appliance as claimed in claim 14, wherein said inflatable membrane (32) is filled with a sponge-like heat conductive material (70).

18. The cooking appliance as claimed in claim 15, further comprising a mini-refrigeration system (66, 68) mounted in said lid (28), for selectively cooling said inflatable membrane (32) and said food item (22).

19. The cooking appliance as claimed in claim 18, further including a battery therein for operating said mini-refrigeration system (66, 68), said bag sealing device and said air pumping device.

20. The cooking appliance as claimed in claim 17, wherein said heating surface (26) is supported by said sponge-like heat conductive material (70).

21. The cooking appliance as claimed in claim 13, wherein said inflatable membrane (32) has concentric ridges (64) on a surface thereof.

22. A cooking appliance as claimed in claim 13, further comprising:
a pressure regulator (62) mounted therein for controlling air pressure inside said inflatable membrane (32);
a bag sealing device mounted near said heating surface (26) for selectively sealing said food item (22) in a plastic bag (24); and
a mini-refrigeration system (66, 68) mounted in said lid (28), for selectively cooling said inflatable membrane (32) and said food item (22).

23. The cooking appliance as claimed in claim 22, further having a clam shell design including a lid (28) and a base member (30), and wherein said heating surface (26) is mounted in said base member (30) and said inflatable membrane (32) is mounted in said lid (28).

24. The cooking appliance as claimed in claim 22, wherein said inflatable membrane (32) is filled with a sponge-like heat conductive material (70), and has concentric ridges (64) on a surface thereof.

## Patentansprüche

1. Verfahren zum Kochen und Pökeln eines Lebensmittels (22), umfassend die Schritte:
Versiegeln eines Lebensmittels (22) in einem luftlosen Modus mit einem Aromablatt (90);
Aufbringen von Druck und Wärme auf das Lebensmittel (22) für einen Zeitraum;
wobei der Schritt des Aufbringens umfasst:
Steuern des Drucks gemäß einer Druckeinstellung, die einer Beschaffenheit des Aromablatts (90) entspricht.

2. Verfahren zum Kochen und Pökeln eines Lebensmittels (22) nach Anspruch 1, wobei der Schritt des Aufbringens auch das Steuern des Drucks gemäß einer Druckeinstellung umfasst, die den Zutaten in dem Aromablatt (90) entspricht.

3. Verfahren zum Kochen und Pökeln eines Lebensmittels (22) nach Anspruch 1, wobei der Schritt des Aufbringens auch den Schritt des Steuerns des Drucks gemäß einer Temperatur der Wärme umfasst.

4. Verfahren zum Kochen und Pökeln eines Lebensmittels (22) nach Anspruch 1, wobei der Schritt des Aufbringens umfasst:
Steuern des Drucks und der Wärmetemperatur gemäß einer Beziehung zwischen dem Druck und der Temperatur und Variieren des Drucks und der Temperatur gemäß einer Funktion des Zeitraums.

5. Verfahren zum Kochen und Pökeln eines Lebensmittels (22) nach Anspruch 4, wobei die Beziehung und die Funktion aus einem Rezept ausgewählt werden, das einer Beschaffenheit des Lebensmittels (22) entspricht.

6. Verfahren zum Kochen und Pökeln eines Lebensmittels (22) nach Anspruch 5, wobei die Beziehung zwischen dem Druck und der Temperatur eine Beziehung ist, bei der die Temperatur ein dominanter Faktor ist und eine Wärmeabsorption in dem Lebensmittel (22) während eines Großteils des genannten Zeitraums konstant bleibt.

7. Verfahren zum Kochen und Pökeln eines Lebensmittels (22) nach Anspruch 1, wobei der Schritt des Versiegelns das Anordnen des Lebensmittels (22) und des Aromablatts (90) in einem Plastikbeutel (24) umfasst.

8. Verfahren zum Kochen und Pökeln eines Lebensmittels (22) nach Anspruch 5, wobei der Schritt des Aufbringens von Druck auf das Lebensmittel (22) die Schritte umfasst:
Anordnen des Plastikbeutels (24) gegen eine Heizfläche (26);
Anbringen einer verformbaren Membran (32) gegen den Plastikbeutel (24) und die Heizfläche (26);
Halten der verformbaren Membran (32) in einem festen Abstand von der Heizfläche (26);
Aufblasen der verformbaren Membran (32) auf den Druck.

9. Verfahren zum Kochen und Pökeln nach Anspruch 1, das weiterhin den Schritt des Auswählens eines Aromablatts (90) umfasst, das einen essbaren Klebstoff umfasst, der eine Säure enthält.

10. Verfahren zum Kochen und Pökeln eines Nahrungsmittels (22) nach Anspruch 9, wobei das Lebensmittel (22) Protein ist und ferner den Schritt des Auswählens einer Druck-Temperatur-Beziehung umfasst, um zu bewirken, dass Albumine aus dem Protein austreten; um das Aromablatt (90) zu kontaktieren und wieder in das Protein absorbiert zu werden.

11. Verfahren zum Kochen und Pökeln eines Lebensmittels (22) nach Anspruch 5, ferner umfassend die Schritte des Kühlens des Plastikbeutels (24) und des Lebensmittels (22) zwischen der aufblasbaren Membran (32) und der Heizplatte (26), während der Schritt des Aufbringens von Druck und Wärme auf den Plastikbeutel (24) verzögert wird.

12. Verfahren zum Kochen und Pökeln eines Lebensmittels (22) nach Anspruch 5, wobei der Druck während des Schritts des Aufbringens von Druck und Wärme abwechselnd entspannt und erhöht wird.

13. Kochgerät zum Kochen von Lebensmitteln (22), umfassend:
eine Heizfläche (26) zum Aufnehmen eines der Lebensmittel (22) und eine aufblasbare Membran (32), die gegen die Heizfläche (26) montiert ist, zum Abdecken der Heizfläche (26) und des Lebensmittels (22);
Arretiervorrichtung zum Halten der aufblasbaren Membran (32) gegen die Heizfläche (26); **gekennzeichnet durch**
eine darin eingebaute Luftpumpvorrichtung zum Aufblasen der aufblasbaren Membran (32) und zum Aufbringen eines Drucks auf das Lebensmittel (22) gegen die Heizfläche (26).

14. Kochgerät nach Anspruch 13, das ferner einen Druckregler (62) zum Steuern eines Luftdrucks innerhalb der aufblasbaren Membran (32) umfasst.

15. Kochgerät nach Anspruch 13, das weiterhin eine Beutelversiegelungsvorrichtung umfasst, die nahe der Heizfläche angebracht ist, um das Nahrungsmittel (22) selektiv in einem Plastikbeutel (24) zu versiegeln.

16. Kochgerät nach Anspruch 15, ferner mit einer Muschelschalenkonstruktion mit einem Deckel (28) und einem Basiselement (30) und wobei die Heizfläche (26) in dem Basiselement (30) montiert ist und die aufblasbare Membran (32) in dem Deckel (28) montiert ist.

17. Kochgerät nach Anspruch 14, wobei die aufblasbare Membran (32) mit einem schwammartigen wärmeleitenden Material (70) gefüllt ist.

18. Kochgerät nach Anspruch 15, ferner umfassend ein Minikühlsystem (66, 68), das in dem Deckel (28) montiert ist, zum selektiven Kühlen der aufblasbaren Membran (32) und des Lebensmittels (22).

19. Kochgerät nach Anspruch 18, das weiterhin eine Batterie enthält, um das Minikühlsystem (66, 68), die Beutelversiegelungsvorrichtung und die Luftpumpvorrichtung zu betreiben.

20. Kochgerät nach Anspruch 17, wobei die Heizfläche (26) von dem schwammartigen wärmeleitenden Material (70) getragen wird.

21. Kochgerät nach Anspruch 13, wobei die aufblasbare Membran (32) konzentrische Rippen (64) auf einer ihrer Oberflächen aufweist.

22. Kochgerät nach Anspruch 13, ferner umfassend:
einen darin angebrachten Druckregler (62), um den Luftdruck innerhalb der aufblasbaren Membran (32) zu steuern;
eine Beutelversiegelungsvorrichtung, die in der Nähe der Heizfläche (26) angebracht ist, um das Lebensmittel (22) selektiv in einem Plastikbeutel (24) zu versiegeln; und
ein Minikühlsystem (66, 68), das in dem Deckel (28) angebracht ist, zum selektiven Kühlen der aufblasbaren Membran (32) und des Lebensmittels (22).

23. Kochgerät nach Anspruch 22, ferner mit einer Muschelschalenkonstruktion mit einem Deckel (28) und einem Basiselement (30) und wobei die Heizfläche (26) in dem Basiselement (30) montiert ist und die aufblasbare Membran (32) in dem Deckel (28) montiert ist.

24. Kochgerät nach Anspruch 22, wobei die aufblasbare Membran (32) mit einem schwammartigen wärmeleitenden Material (70) gefüllt ist und konzentrische Rippen (64) auf einer Oberfläche davon aufweist.

## Revendications

1. Procédé de cuisson et de salaison d'un produit alimentaire (22) comprenant les étapes consistant à :
étanchéifier un produit alimentaire (22) dans un mode sans air avec une feuille d'arôme (90) ;
appliquer une pression et une chaleur sur ledit produit alimentaire (22) pendant une période de temps ;
dans lequel ladite étape d'application consiste à :
contrôler ladite pression selon un réglage de pression correspondant à une nature de ladite feuille d'arôme (90).

2. Procédé de cuisson et de salaison d'un produit alimentaire (22) selon la revendication 1, dans lequel ladite étape d'application comprend également l'étape consistant à contrôler ladite pression selon un réglage de pression correspondant aux ingrédients de ladite feuille d'arôme (90).

3. Procédé de cuisson et de salaison d'un produit alimentaire (22) selon la revendication 1, dans lequel ladite étape d'application comprend également l'étape consistant à contrôler ladite pression en fonction de la température de ladite chaleur.

4. Procédé de cuisson et de salaison d'un produit alimentaire (22), selon la revendication 1, dans lequel ladite étape d'application consiste à :
contrôler lesdites pression et température de chaleur selon une relation entre ladite pression et ladite température et varier ladite pression et ladite température selon une fonction de ladite période de temps.

5. Procédé de cuisson et de salaison d'un produit alimentaire (22), selon la revendication 4, dans lequel ladite relation et ladite fonction sont sélectionnées à partir d'une recette correspondant à une nature dudit produit alimentaire (22).

6. Procédé de cuisson et de salaison d'un produit alimentaire (22) selon la revendication 5, dans lequel ladite relation entre ladite pression et température est une relation où ladite température est un facteur dominant et une absorption de chaleur dans ledit produit alimentaire (22) reste constante pendant une majeure partie de ladite période de temps.

7. Procédé de cuisson et de salaison d'un produit alimentaire (22) selon la revendication 1, dans lequel ladite étape consistant à étanchéifier comprend le placement dudit produit alimentaire (22) et de ladite feuille d'arôme (90) dans un sac en plastique (24).

8. Procédé de cuisson et de salaison d'un produit alimentaire (22) selon la revendication 5, dans lequel ladite étape consistant à appliquer une pression sur ledit produit alimentaire (22) comprend les étapes consistant à :
placer ledit sac en plastique (24) contre une surface chauffante (26) ;
appliquer une membrane déformable (32) contre ledit sac en plastique (24) et ladite surface chauffante (26) ;
retenir ladite membrane déformable (32) à une distance fixe de ladite surface chauffante (26) ;
gonfler ladite membrane déformable (32) à ladite pression.

9. Procédé de cuisson et de salaison selon la revendication 1,
comprenant en outre l'étape consistant à sélectionner une feuille d'arôme (90) comprenant un adhésif comestible contenant un acide.

10. Procédé de cuisson et de salaison d'un produit alimentaire (22) selon la revendication 9, dans lequel ledit produit alimentaire (22) est une protéine et comprenant en outre l'étape consistant à sélectionner une relation pression-température pour faire exsuder des albumines de ladite protéine ; pour entrer en contact avec ladite feuille d'arôme (90), et être absorbée à nouveau dans ladite protéine.

11. Procédé de cuisson et de salaison d'un produit alimentaire (22) selon la revendication 5, comprenant en outre les étapes consistant à refroidir ledit sac en plastique (24) et ledit produit alimentaire (22) entre ladite membrane gonflable (32) et ladite plaque chauffante (26), tout en retardant ladite étape d'application de pression et de chaleur audit sac en plastique (24).

12. Procédé de cuisson et de salaison d'un produit alimentaire (22) selon la revendication 5, dans lequel ladite pression est alternativement relâchée et augmentée pendant ladite étape d'application de pression et de chaleur.

13. Appareil de cuisson pour cuire des produits alimentaires (22) comprenant :
une surface chauffante (26) destinée à recevoir un aliment parmi lesdits produits alimentaires (22), et une membrane gonflable (32) montée contre ladite surface chauffante (26), pour recouvrir ladite surface chauffante (26) et ledit produit alimentaire (22) ;
un dispositif de verrouillage pour retenir ladite membrane gonflable (32) contre ladite surface chauffante (26) ; **caractérisé par**
un dispositif de pompage d'air incorporé dans celui-ci pour gonfler ladite membrane gonflable (32) et pour appliquer une pression sur ledit produit alimentaire (22) contre ladite surface chauffante (26).

14. Appareil de cuisson selon la revendication 13, comprenant en outre un régulateur de pression (62) pour contrôler une pression d'air dans ladite membrane gonflable (32).

15. Appareil de cuisson selon la revendication 13, comprenant en outre un dispositif d'étanchéification de sac monté près de ladite surface chauffante pour étanchéifier sélectivement ledit produit alimentaire (22) dans un sac en plastique (24).

16. Appareil de cuisson selon la revendication 15, ayant en outre une conception de double coquille ayant un couvercle (28) et un élément de base (30), et dans lequel ladite surface chauffante (26) est montée dans ledit élément de base (30) et ladite membrane gonflable (32) est montée dans ledit couvercle (28).

17. Appareil de cuisson selon la revendication 14, dans lequel ladite membrane gonflable (32) est remplie d'un matériau conducteur de chaleur de type éponge (70).

18. Appareil de cuisson selon la revendication 15, comprenant en outre
un système de mini-réfrigération (66, 68) monté dans ledit couvercle (28), pour refroidir sélectivement ladite membrane gonflable (32) et ledit produit alimentaire (22).

19. Appareil de cuisson selon la revendication 18, comprenant en outre une batterie dans celui-ci pour faire fonctionner ledit système de mini-réfrigération (66, 68), ledit dispositif d'étanchéification de sac et ledit dispositif de pompage d'air.

20. Appareil de cuisson selon la revendication 17, dans lequel ladite surface chauffante (26) est supportée par ledit matériau conducteur de chaleur de type éponge (70).

21. Appareil de cuisson selon la revendication 13, dans lequel ladite membrane gonflable (32) présente une surface de crêtes concentriques de celui-ci.

22. Appareil de cuisson selon la revendication 13,
comprenant en outre:
un régulateur de pression (62) monté dans celui-ci pour contrôler la pression d'air à l'intérieur de ladite membrane gonflable (32) ;
un dispositif d'étanchéification de sac monté près de ladite surface chauffante (26) pour étanchéifier sélectivement ledit produit alimentaire (22) dans un sac en plastique (24) ; et
un système de mini-réfrigération (66, 68) monté dans ledit couvercle (28) pour refroidir sélectivement ladite membrane gonflable (32) et ledit produit alimentaire (22).

23. Appareil de cuisson selon la revendication 22, ayant en outre une conception de double coquille comprenant un couvercle (28) et un élément de base (30), et dans lequel ladite surface chauffante (26) est montée dans ledit élément de base (30) et ladite membrane gonflable (32) est montée dans ledit couvercle (28).

24. Appareil de cuisson selon la revendication 22, dans lequel ladite membrane gonflable (32) est remplie d'un matériau conducteur de chaleur de type éponge (70), et présente des crêtes concentriques (64) sur une de ses surfaces.
